# EUROPEAN PATENT SPECIFICATION

(11) **EP 0 438 487 B1**
(45) Date of publication and mention of the grant of the patent: **27.07.1994**
(21) Application number: 89911833.5
(22) Date of filing: 04.10.1989
(51) Int. Cl.: B25J 17/02, A41H 43/02

(54) **SHEET HANDLING APPARATUS**
VORRICHTUNG ZUM HANDHABEN VON FLACHMATERIAL
APPAREIL DE MANIPULATION DE PIECES D'ETOFFE

(30) Priority: 04.10.1988 GB 8823213
(43) Date of publication of application: 31.07.1991
(73) Proprietor: CEGELEC CONTROLS LTD., Rugby Warwickshire CV21 1BU (GB); COURTAULDS TEXTILES (HOLDINGS) LIMITED, Walkden Worsley Manchester M28 5WR (GB)
(72) Inventor: MORRIS, Paul, Richard, Leicester LE9 6RT (GB); MUNDAY, David, Christopher, Leicester LE4 7SA (GB); JEFFCOAT, Keith, Nuneaton (GB)
(74) Representative: Hoste, Colin Francis
(86) International application number: GB8901179
(87) International publication number: WO9003872

(56) References cited:
- EP-A- 0 036 912
- EP-A- 0 163 065
- EP-A- 0 191 246
- EP-A- 0 307 550
- GB-A- 2 143 798

## Description

This invention relates to apparatus for handling flexible sheets,and particularly to apparatus for moving pieces of fabric over a work area, such as in a garment manufacturing system.

Garments, such as underclothes and blouses, have previously been made by passing suitably-shaped pieces of fabric ("cut parts") to a machinist, who then overlays and/or folds them as required, and passes them through a sewing machine. The machinist binds the edges and adds lace and elasticated waistbands, where necessary. The accuracy of that process relies on the machinist's skill, and nominally-identical garments can finish up with quite large differences in sizes and shapes.

Systems have been proposed for automating at least a part of the manufacturing process by using a robot to move a cut part to a work station, such as a sewing machine. The movement of the cut part is effected by a "gripper" which is mounted on the output shaft of the robot. In the known systems the gripper has engaged with the cut part by virtue of suction applied to the gripper, which causes the cut part to adhere to the gripper, or by virtue of downward pressure applied to the gripper by the robot so that horizontal movement of the gripper by the robot then causes the cut part to slide over a smooth work table on which it is positioned.

It is an object of the present invention to provide an improved arrangement for effecting engagement between a gripper and a flexible sheet.

A coupling device for coupling a gripper to an output shaft of a robot, the gripper having a lower surface which in use of the robot is engageable with the upper surface of a flexible sheet, whereby movement of the gripper by the robot shaft causes the sheet to slide over a surface therebelow, the coupling device being characterised by means to allow the gripper to bear against the sheet while preventing relative rotation between the shaft and the gripper, comprising a sleeve which is slidable longitudinally of the robot output shaft, and a flexible coupling for interconnecting the sleeve and the gripper, the flexible coupling comprising first and second hollow members which are resiliently interconnected to allow relative tilting therebetween, the members forming therebetween a chamber into which fluid can be introduced under pressure to cause relative movement between the members, whereby portions of the members make mutual non-resilient contact, thereby rendering the resilient interconnection ineffective.

An embodiment of the invention will now be described, by way of example, with reference to the accompanying drawings, in which
Figure 1 is a schematic side view of a part of a garment manufacturing system incorporating a coupling device in accordance with the invention,
Figure 2 is a plan view of a flexible coupling forming part of the device of Figure 1, and
Figure 3 shows a cross section taken along a line III-III of Figure 2.

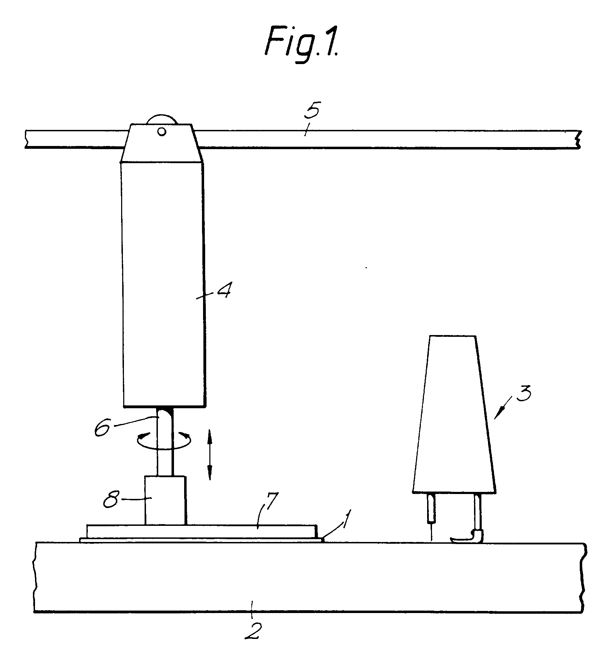

Referring to Figure 1, a cut part 1 is to be moved over a flat smooth table 2 to a sewing station 3 by a robot 4. The robot is supported by an overhead gantry 5 for movement longitudinally and transversely of the table. The robot has a substantially vertical output shaft 6 which can rotate about its axis and can move longitudinally upwards and downwards. A gripper 7 is attached to the shaft 6 by means of a flexible coupling 8.

We have found that the best gripper structure appears to comprise a foam pad mounted on a rigid support plate of whatever shape is required for the particular operation (e.g. it might be circular, rectangular, U-shaped for getting under the body of the sewing machine, etc.). The gripper may be quite small for holding a cut part of lace or it may be up to, say, 1 metre long and ½ metre wide for holding cut parts for some types of garment. The optimum arrangement would give an even distribution of downward force on the cut part over the whole of the area of the gripper.

However, various problems arise. If the robot 4 is made to bear down on the gripper 7 at its attachment point, which may not be anywhere near the centre of area of the gripper, the foam will be compressed against the cut part under the connection point, but may become completely separated from the cut part at more remote points and so provide no control. It would be possible to control the pressure exerted by the robot along a number of axes to prevent tipping of the gripper, but this would require a complicated arrangement of sensors and force controllers.

We have found that, in order to obtain the desired substantially even force distribution in a simple manner, the gripper should not be pressed down by the robot but, in accordance with the present invention, should be allowed to act downwards on the cut part solely under its own weight. One possible arrangement would be to allow the gripper to float on a ball joint on the end of the robot shaft. However, this is not the best arrangement, as it has some drawbacks. Firstly, due to friction between the gripper and the cut part and/or the table, the leading edge of the gripper may tend to "dig-in" during movement of the cut part, so that the gripper tips up, leaving the cut part uncontrolled. Secondly, when the gripper is raised from the table, unless it is absolutely balanced (which it very probably will not be) it will tip. Then, when it is lowered on to a cut part, the edge of the heavier end of the gripper will contact the cut part first and, while the gripper is flattening out, the cut part will be moved away from its starting position, which may already have been accurately sensed.

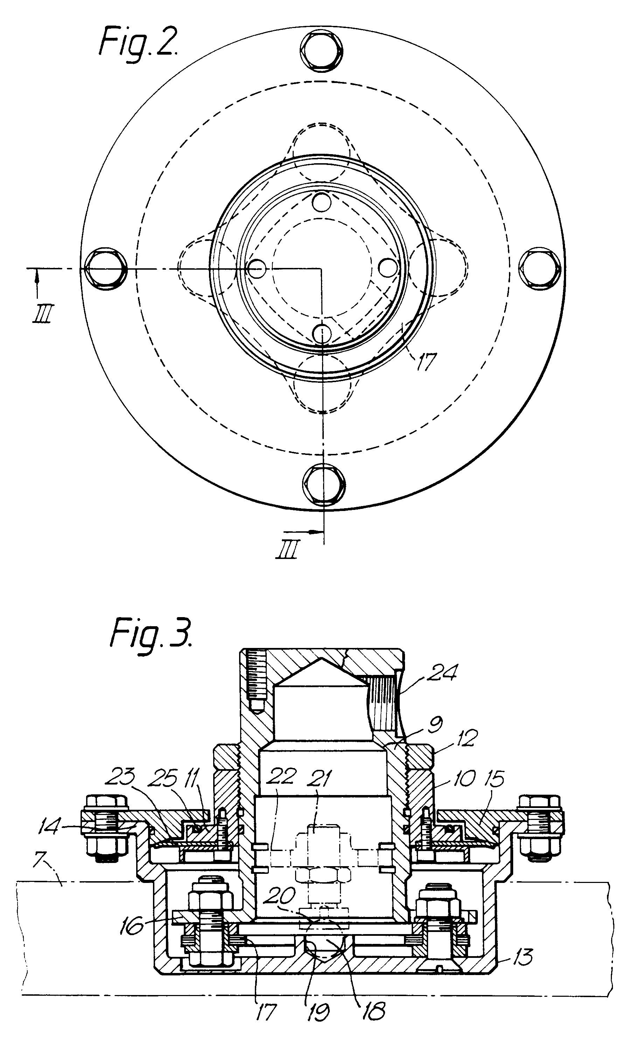

In a preferred embodiment of the invention the coupling 8 is so constructed as to alleviate the above-mentioned drawbacks. The coupling is shown in plan in Figure 2 and in section in Figure 3. It should be noted that the two halves of the sectional view are mutually rotated by 90°. It comprises an upper hollow cylindrical member 9 which is attached to the robot shaft 6 by a ball spline device (not shown), so that the meter 9 can move up and down relative to the robot shaft but cannot twist relative thereto (as the robot is required to rotate the gripper accurately in order to achieve the necessary orientation of the cut part, there must be substantially no relative rotation between the robot shaft and the gripper). An outer collar 10 having an outwardly-pointing flange 11 is screwed on the outside of the member 9, and is locked by a nut 12. A lower hollow cylindrical cap member 13 has an outwardly-extending flange 14 to which a cover plate 15 is bolted. The cover plate 15 overlaps the flange 11 when the components are assembled. The member 9 has an outwardly-pointing flange 16 to which a generally square multi-layer flexible coupling 17 is attached at two opposite corners. The other corners of the coupling are attached to the member 13. Hence, the members 9 and 13 can tilt relative to each other along two orthogonal lines, but substantially no rotation between them is allowed by the coupling 17.

To provide further control over the alignment of the axes of the members 9 and 13, a ball 18 is seated in a recess 19 in the base of the member 13 and in a recess 20 in the end of an axial, externally threaded member 21. The distance of the member 21 from the member 13 is adjustable by means of a screwed connection to a perforated circular support 22 which is attached to the inner surface of the cylindrical wall of the meter 9. A resilient diaphragm 23 seals against the cover plate 15 so that a sealed chamber is formed within the members 9 and 13, the collar 10 and the plate 15. An inlet 24 for receiving compressed air is provided near the top of the member 9. The gripper 7 is rigidly attached to the member 13 so that the centre of the ball 18 is approximately half-way down the depth of the gripper.

In use of the device, the mass of the ball spline and the coupling is approximately balanced by tension springs (not shown) coupled between the ball spline and to the robot shaft, so that the effective mass acting on the cut part is substantially only that of the gripper itself. When the robot shaft is raised to separate the gripper from the cut part, compressed air is introduced into the chamber through the inlet 24, and the member 13 moves downward under the air pressure, so that the cover plate 15 bears firmly against the flange 11. This causes contact to be made between the cover plate and an O-ring 25, which effects further sealing of the chamber. This now rigid connection between the members 9 and 13 holds the gripper horizontal, irrespective of its degree of unbalance. The pressure is maintained until after the gripper has been subsequently lowered on to the cut part, and then it is released. The gripper can now adopt its required attitude on the cut part, and the downward force is dependent only on the dead weight of the gripper. The flexible coupling 17 now allows slight tilting of the gripper, but has sufficient rigidity to prevent the excessive tilting due to friction mentioned above and, since the robot does not press down on the gripper, the above-mentioned tilting due to offsetting of the robot shaft connection position does not occur.

## Claims

1. A coupling device for coupling a gripper (7) to an output shaft (6) of a robot (4), the gripper having a lower surface which in use of the robot is engageable with the upper surface of a flexible sheet (1), whereby movement of the gripper by the robot shaft causes the sheet to slide over a surface therebelow, the coupling device being characterised by means (8) to allow the gripper (7) to bear against the sheet while preventing relative rotation between the shaft and the gripper, comprising a sleeve which is slidable longitudinally of the robot output shaft (6) , and a flexible coupling (9-24) for interconnecting the sleeve and the gripper, the flexible coupling comprising first and second hollow members (13,10) which are resiliently interconnected (17) to allow relative tilting therebetween, the members forming therebetween a chamber into which fluid can be introduced under pressure to cause relative movement between the members, whereby portions (11,15) of the members make mutual non-resilient contact, thereby rendering the resilient interconnection ineffective.

2. A device as claimed in claim 1, characterised in that the sleeve is arranged for splined engagement with the robot shaft (6).

3. A device as claimed in claim 1 or claim 2, characterised in that the members (10,13) are resiliently interconnected by a resilient structure (17) having two pairs of opposite corners, and in that the first member is attached to the structure at one pair of corners and the second member is attached to the structure at the other pair of corners.

4. A device as claimed in claim 3, characterised in that the resilient structure (17) comprises a stack of resilient plates.

5. A device as claimed in any preceding claim, characterised in that the first member (13) includes an inwardly-directed flange portion (15), and the second member (10) includes a diaphragm (23) which engages with the flange portion to form a seal between the members.

6. A device as claimed in Claim 5, characterised by further sealing means (25) for sealing between the members (13,10) which becomes effective when the members are moved relative to each other by the fluid pressure.

7. A device as claimed in any preceding claim, characterised by ball means (18) which acts between retaining surfaces (19,20) of the first and second members (13,10) to centralise the members at a level which will lie within the thickness of the gripper (7) when attached thereto.

8. Garment manufacturing apparatus characterised by a coupling device (8) as claimed in any preceding claim.

## Patentansprüche

1. Kupplungsvorrichtung zum Kuppeln eines Greifers (7) mit einer Ausgangswelle (6) eines Roboters (4), welcher Greifer eine untere Oberfläche hat. die beim Betrieb des Roboters in Angriff mit der oberen Oberfläche eines biegsamen Flachmaterials (1) bringbar ist, wobei eine durch die Roboterwelle bewirkte Bewegung des Greifers eine Verschiebung des Flachmaterials auf der darunter befindlichen Oberfläche bewirkt, welche Kupplungsvorrichtung gekennzeichnet ist durch Mittel (8), die es dem Greifer (7) gestatten, gegen das Flachmaterial zu drücken, jedoch eine relative Drehbewegung zwischen der Welle und dem Greifer verhindern, enthaltend eine Hülse, die in Längsrichtung der Roboterausgangswelle (6) verschiebbar ist, und eine flexible Kupplung (9 bis 24) zum miteinander Verbinden der Hülse und des Greifers, weiche flexible Kupplung enthält ein erstes und ein zweites hohles Bauteil (13, 10), die federnd miteinander verbunden sind (17), um ein relatives Schrägstellen zwischen ihnen zu gestatten, welche Bauteile zwischen sich eine Kammer bilden, in die unter Druck ein Fluid einführbar ist, um eine relative Bewegung zwischen den Bauteilen zu bewirken, wodurch Abschnitte (11, 15) der Bauteile in eine gegenseitige nicht federnde Berührung gelangen und dadurch die federnde Verbindung zwischen den Bauteilen unwirksam gemacht wird.

2. Vorrichtung nach Anspruch 1,
**dadurch gekennzeichnet,**
daß die Hülse derart ausgebildet ist, daß sie mit der Roboterwelle (6) nach Art einer Nutverbindung in Eingriff steht.

3. Vorrichtung nach Anspruch 1 oder Anspruch 2,
**dadurch gekennzeichnet,**
daß die Bauteile (10, 13) durch eine federnde Konstruktion (17) mit zwei Paaren entgegengesetzter Ecken federnd miteinander verbunden sind und daß das erste Bauteil bei einem Paar der Ecken an der Konstruktion befestigt ist und das zweite Bauteil bei dem zweiten Paar der Ecken an der Konstruktion befestigt ist.

4. Vorrichtung nach Anspruch 3,
**dadurch gekennzeichnet,**
daß die federnde Konstruktion (17) einen Stapel federnder Plättchen aufweist.

5. Vorrichtung nach irgendeinem vorangegangenen Anspruch,
**dadurch gekennzeichnet,**
daß das erste Bauteil (13) einen nach innen gerichteten Flanschabschnitt (15) hat und das zweite Bauteil (10) eine Membran (23) enthält, die an dem Flanschabschnitt angreift, um zwischen den Bauteilen eine Dichtung zu bilden.

6. Vorrichtung nach Anspruch 5,
**gekennzeichnet durch**
weitere Dichtungsmittel (25) zum Vorsehen einer Abdichtung zwischen den Bauteilen (13, 10), welche Abdichtung wirksam wird, wenn die beiden Bauteile durch Anwendung von Fluiddruck in bezug aufeinander bewegt werden.

7. Vorrichtung nach irgendeinem vorangegangenen Anspruch,
**gekennzeichnet durch**
eine Kugelvorrichtung (18), die auf Aufnahmeflächen (19, 20) des ersten und zweiten Bauteils (13, 10) einwirkt, um die Bauteile bei einem Niveau zu zentrieren, das im montierten Zustand innerhalb der Dickenabmessung des Greifers (7) liegt.

8. Gerät zur Herstellung von Kleidung,
**gekennzeichnet durch**
eine Kupplungsvorrichtung (8) wie sie in einem vorangegangenen Anspruch beansprucht ist.

## Revendications

1. Dispositif d'accouplement d'un organe (7) de saisie à un arbre (6) de sortie d'un robot (4), l'organe de saisie ayant une surface inférieure qui, pendant l'utilisation du robot, est destinée à coopérer avec la surface supérieure d'une feuille souple (1), de manière que le déplacement de l'organe de saisie sous l'action de l'arbre du robot provoque un glissement de la feuille sur une surface qui se trouve au-dessous de celle-ci, le dispositif d'accouplement étant caractérisé par un dispositif (8) destiné à permettre à l'organe de saisie (7) d'être en appui contre la feuille sans rotation relative entre l'arbre et l'organe de saisie, comprenant un manchon qui peut coulisser longitudinalement sur l'arbre (6) de sortie du robot, et un accouplement flexible (9-24) destiné à interconnecter le manchon et l'organe de saisie, l'accouplement flexible comprenant un premier et un second organe creux (13, 10) qui sont interconnectés élastiquement (17) afin qu'ils permettent un certain pivotement relatif entre eux, les organes formant entre eux une chambre dans laquelle peut être introduit un fluide sous pression destiné à provoquer un déplacement relatif des organes, si bien que les parties (11, 15) des organes sont en contact mutuel non élastique et rendent inefficace l'interconnexion élastique.

2. Dispositif selon la revendication 1, caractérisé en ce que le manchon est disposé afin qu'il coopère par les cannelures avec l'arbre (6) du robot.

3. Dispositif selon la revendication 1 ou 2, caractérisé en ce que les organes (10, 13) sont interconnectés élastiquement par une structure élastique (17) ayant deux paires de coins opposés, et en ce que le premier organe est fixé à la structure à une première paire de coins et le second organe est fixé à la structure à l'autre paire de coins.

4. Dispositif selon la revendication 3, caractérisé en ce que la structure élastique (17) comporte une pile de plaques élastiques.

5. Dispositif selon l'une quelconque des revendications précédentes, caractérisé en ce que le premier organe (13) comporte une partie de flasque (15) dirigée vers l'intérieur, et le second organe (10) comporte un diaphragme (23) qui coopère avec la partie de flasque pour la formation d'un joint d'étanchéité entre les organes.

6. Dispositif selon la revendication 5, caractérisé par un dispositif supplémentaire d'étanchéité (25) destiné à assurer la coopération étanche des organes (13, 10), cette coopération devenant efficace lorsque les organes sont déplacés l'un par rapport à l'autre par le fluide sous pression.

7. Dispositif selon l'une quelconque des revendications précédentes, caractérisé par un dispositif à billes (18) agissant entre les surfaces de retenue (19, 20) du premier et du second organe (13, 10) afin que les organes soient centrés à un niveau se trouvant dans l'épaisseur de l'organe de saisie (7) lorsqu'il leur est fixé.

8. Appareil de fabrication de vêtements, caractérisé par un dispositif d'accouplement (8) selon l'une quelconque des revendications précédentes.
